# EUROPÄISCHE PATENTSCHRIFT

(11) **EP 2 359 684 B1**
(45) Veröffentlichungstag und Bekanntmachung des Hinweises auf die Patenterteilung: **09.08.2017**
(21) Anmeldenummer: 10015759.3
(22) Anmeldetag: 17.12.2010
(51) Int. Cl.: A01K 13/00

(54) **Tierpflege- und/oder Reinigungseinrichtung**
Animal care and/or cleaning device
Dispositif de soin et/ou de nettoyage d'animaux

(30) Priorität: 24.02.2010 DE 102010009178
(43) Veröffentlichungstag der Anmeldung: 24.08.2011
(73) Patentinhaber: Suevia Haiges GmbH, 74366 Kirchheim/Neckar (DE)
(72) Erfinder: Haiges, Frank, 74366 Kirchmein/Neckar (DE)
(74) Vertreter: Bartels, Martin Erich Arthur

(56) Entgegenhaltungen:
- WO-A1-2005/099447
- DE-B3-102004 040 250
- DE-U1- 7 904 082
- DE-U1- 9 103 341
- DE-U1- 29 916 663

## Beschreibung

Die Erfindung betrifft eine Tierpflege- und/oder Reinigungseinrichtung mit den Merkmalen im Oberbegriff von Anspruch 1.

Gattungsgemäße Tierpflege- und/oder Reinigungseinrichtungen kommen beim Halten von Tieren, insbesondere beim Halten von Nutztieren in einem landwirtschaftlichen Betrieb, zum Einsatz und kommen den Bedürfnissen der Tiere sich zu reiben und zu kratzen entgegen. Durch den Einsatz der gattungsgemäßen Tierpflege- und/oder Reinigungseinrichtungen reinigen sich die Tiere zumindest teilweise selbst und befreien sich so von Schmutz. Das Bürsten stimuliert und regt den Blutkreislauf der Tiere an. Dergestalt lässt sich der Tierkomfort erhöhen, die Tiere werden ruhiger und ihr Wohlbefinden wird gesteigert. Darüber hinaus wird ein möglicherweise zeitaufwendiges Putzen der Tiere von Hand auf ein Minimum reduziert.

So sind für die Anwendung bei Rindern, insbesondere Milchkühen aus dem Hauptkatalog 2009 der Suevia Haiges GmbH in Kirchheim/Neckar, Deutschland (Drucklegung Oktober 2008) beispielsweise die Kuhbürste "Profi-Cow", Modell 4000 (Bestell-Nr. 130.4000) und die Kuhbürste "Agricow", Modell 3000 (Bestell-Nr. 130.300) bekannt. Das Modell 4000 weist zwei antreibbare Bürstenkörper auf, von denen einer um eine vertikale und der weitere um eine horizontale, jeweils starre Drehachse in Drehbewegungen versetzbar sind. Der um seine horizontale Drehachse drehbare und insoweit horizontal angeordnete Bürstenkörper wird vorzugsweise zum Bürsten des Rückenbereichs beispielsweise einer Milchkuh eingesetzt. Beim Modell 4000 ist auch vorgesehen, dass der horizontal angeordnete Bürstenkörper durch eine geeignete Aufhängung unter Beibehaltung seiner horizontalen Ausrichtung unterschiedliche Höhen für unterschiedlich große Tiere einnehmen kann. Bei dem Modell 3000 hingegen ist nur ein Bürstenkörper vorgesehen, der einseitig in einer endseitigen Drehaufnahme geführt und derart gelagert ist, dass ein Verschwenken aus einer schrägen Ausgangslage des Bürstenkörpers heraus ermöglicht ist. Bei dem Modell 3000 ist durch die verschwenkbare Anordnung des Bürstenkörpers eine Anpassbarkeit für unterschiedlich große Tiere realisiert. Während das Modell 4000. einen Bürstenkörper aufweist, der an seinen beiden Enden in Drehaufnahmen gelagert ist und von daher eine hohe Stabilität hat, weist das Modell 3000 den Vorteil auf, dass durch die Verschwenkbarkeit des Bürstenkörpers unterschiedliche Rücken- bzw. Seitenpartien des Tieres gebürstet werden können. In diesem Zusammenhang ist jedoch noch erwähnenswert, dass es vorkommt, dass beispielsweise Rinder, sei es wegen eines natürlichen Spieltriebs oder auch gefördert durch ein zeitweise störrisches Verhalten, durch ein Dagegenwerfen, Tritte u.ä. erhebliche Kräfte auf Bürstenkörper bzw. die Tierpflege- und/oder Reinigungseinrichtung ausüben können, was diese beschädigen kann. Insbesondere besteht die Gefahr, dass Tiere auf die herausragende Welle aufspringen und diese verbiegen.

Die WO 2005/099447 A1 der Schutzrechtsinhaberin offenbart eine Tierpflege- und/oder Reinigungseinrichtung mit einem in mindestens einer Drehrichtung um eine Drehachse mittels einer Antriebseinrichtung antreibbaren Bürstenkörper, der endseitig an seinen beiden Enden in Drehaufnahmen geführt ist, die mit einer Halteeinrichtung verbunden sind, wobei für eine Schrägstellung der Drehachse des Bürstenkörpers relativ zur Vertikalen die obere der beiden Drehaufnahmen von der Halteeinrichtung einen größeren Abstand besitzt als die untere Drehaufnahme, wobei die Drehaufnahmen über Führungseinrichtungen derart bewegbar gelagert sind, dass der Bürstenkörper, ausgehend von einer Ausgangsstellung, unter Einwirkung eines Tierkörpers in Richtung einer Pflege- und/oder Reinigungsstellung auslenkbar ist, und wobei zumindest eine der Führungseinrichtungen mit der Rückstelleinrichtung gekoppelt ist, die zumindest im Reinigungs- und/oder Pflegebetrieb den rotierenden Bürstenkörper in Richtung seiner Ausgangsstellung zu halten sucht. Die Rückstellung des Bürstenkörpers erfolgt dabei ausschließlich aufgrund der auf ihn einwirkenden Schwerkraft und die Antriebseinrichtung ist für den Antrieb des Bürstenkörpers über ein Getriebe und ein Gelenk an diesen gekoppelt.

Weitere Tierpflege- und/oder Reinigungseinrichtungen gehen aus der DE 91 03 341 U1, DE 79 04 082 U1 und der DE 10 2004 040 250 B3 hervor, bei denen entweder keine Drehlagerung am freien Ende des Bürstenkörpers oder nur eine Lagerung an einem Arm vorgesehen ist.

Ausgehend von dem genannten Stand der Technik liegt der Erfindung die Aufgabe zugrunde, eine Tierpflege- und/oder Reinigungseinrichtung bereitzustellen, die bei möglichst großer Stabilität dennoch eine hohe Flexibilität zur Anpassung an unterschiedliche Tierkörper, insbesondere an Tierkörper unterschiedlicher Größe, aufweist. Des Weiteren soll die erfindungsgemäße Tierpflege- und/oder Reinigungseinrichtung in hohem Maße auch mutwilligen Angriffen durch Tiere widerstehen können.

Erfindungsgemäß ist diese Aufgabe durch eine Tierpflege- und/oder Reinigungseinrichtung gelöst, die die Merkmale des Patentanspruches 1 in seiner Gesamtheit aufweist.

Gemäß dem Kennzeichen von Anspruch 1 ist vorgesehen, dass die Rückstelleinrichtung einen als Feder ausgeführten Kraftspeicher aufweist, der in seinem entspannten Zustand den Bürstenkörper in der Ausgangsstellung zu halten sucht und durch Einwirkung eines Tierkörpers in einen gespannten Zustand versetzbar ist, und dass die Antriebseinrichtung derart mit dem Bürstenkörper gekoppelt ist, dass die Antriebseinrichtung gemeinsam mit dem Bürstenkörper bewegbar ist.

Die Tierpflege- und/oder Reinigungseinrichtung weist einen in mindestens einer Drehrichtung um eine Drehachse antreibbaren Bürstenkörper auf, der endseitig an seinen beiden Enden in Drehaufnahmen geführt ist, die mit einer Halteeinrichtung verbunden sind. Dadurch, dass für eine Schrägstellung der Drehachse des Bürstenkörpers relativ zur Vertikalen die obere der beiden Drehaufnahmen von der Halteeinrichtung einen größeren Abstand besitzt als die untere Drehaufnahme, befindet sich der schräg gestellte Bürstenkörper in einer Position, bei der sowohl die Flanken als auch der Rücken eines Tieres gebürstet werden können, so dass auf eine beim Stand der Technik vorgesehene, horizontale zweite Bürste verzichtet werden kann. Dadurch, dass der Bürstenkörper ferner an seinen beiden Enden in Drehaufnahmen geführt ist, weist die erfindungsgemäße Tierpflege- und/oder Reinigungseinrichtung eine hohe Stabilität auf.

Die Führungseinrichtungen der Drehaufnahmen sind derart bewegbar gelagert, dass der Bürstenkörper ausgehend von einer Ausgangsstellung unter Einwirkung eines Tierkörpers in Richtung einer Pflege- und/oder Reinigungsstellung auslenkbar ist, wobei eine Rückstelleinrichtung zumindest im Reinigungs- und/oder Pflegebetrieb den rotierenden Bürstenkörper in Richtung seiner Ausgangsstellung zu halten sucht. Durch die Bewegung des Bürstenkörpers entgegen der Wirkung der Rückstelleinrichtung kann die Einrichtung vom Tier eingeschaltet werden. Durch die Rückstelleinrichtung, die den Bürstenkörper in Richtung seiner Ausgangsstellung zu halten sucht, wird ein Tier die Tierpflege- und/oder Reinigungseinrichtung nach einer Betriebspause jeweils in der gewohnten Ausgangsstellung vorfinden, so dass hier mit einer kurzen Eingewöhnungszeit der Tiere zu rechnen ist. Sofern die dahingehende Ausgangsstellung insbesondere auf kleinere Tiere abgestimmt ist, ist eine Erleichterung bei der Verwendung der Tierpflege- und/oder Reinigungseinrichtung für solche kleineren Tiere gegeben. Daneben werden größere Tiere problemlos eine für sie angenehme Auslenkung des Bürstenkörpers aus seiner Ausgangsstellung bewirken können. Des weiteren ist durch eine dahingehende Rückstelleinrichtung, die den Bürstenkörper in Richtung seiner Ausgangsstellung zu halten sucht, auch ermöglicht, dass ein Tier, das durch Einwirken seines Körpers auf den Bürstenkörper diesen aus seiner Ausgangsstellung auslenkt, in Abhängigkeit von dem Grad der Auslenkung, die durch Drücken gegen die rotierende Bürste erfolgt, eine unterschiedliche Bürst- und Massagewirkung erzielen kann.

Zumindest eine der Führungseinrichtungen ist mit der Rückstelleinrichtung gekoppelt, wobei die Rückstelleinrichtung einen Kraftspeicher aufweist, der in seinem entspannten Zustand den Bürstenkörper in der Ausgangsstellung zu halten sucht und durch Einwirkung eines Tierkörpers in einen gespannten Zustand versetzbar ist. Durch das Vorsehen der dahingehenden Rückstelleinrichtung weist der mindestens eine Bürstenkörper eine wiederkehrende Ausgangsstellung auf, sofern kein Tierkörper auf diesen einwirkt. Die Ausgangsstellung kann somit so gewählt werden, dass sie sowohl zu einem einfachen Betrieb der Tierpflege und/oder Reinigungseinrichtung durch Tiere als auch zu einem möglichst ungehinderten Arbeiten von Servicepersonal beispielsweise in einem mit der Tierpflege- und/oder Reinigungseinrichtung ausgestatteten Stall führt.

Die Tierpflege- und/oder Reinigungseinrichtung weist eine Antriebseinrichtung zum Antrieb des Bürstenkörpers auf, welche derart mit dem Bürstenkörper gekoppelt ist, dass die Antriebseinrichtung gemeinsam mit dem Bürstenkörper bewegbar ist. Dadurch ist ein einfacher Aufbau der Tierpflege- und/oder Reinigungseinrichtung gegeben, insbesondere kann im Servicefall eine Bürste einschließlich der Antriebseinrichtung problemlos ausgewechselt werden und so gegebenenfalls an anderer Stelle repariert werden, während die eigentliche Tierpflege- und/oder Reinigungseinrichtung bereits nach kurzer Zeit wieder in Betrieb genommen werden kann. Des Weiteren kann bei einer schrägen Ausgangsstellung des Bürstenkörpers die Anordnung der Antriebseinrichtung an dem Bürstenkörper so gewählt sein, dass eine Erhöhung eines auf den Bürstenkörper wirkenden Drehmoments in Richtung der Ausgangsstellung erzielt ist.

Bei einer Ausführungsform der erfindungsgemäßen Tierpflege- und/oder Reinigungseinrichtung lässt zumindest eine der Führungseinrichtungen eine Bewegung der zugeordneten Drehaufnahme längs einer Bahn mit geradem und/oder gekrümmtem Bahnverlauf zu und dergestalt ist der jeweilige Bürstenkörper auslenkbar. Sofern nur eine der Führungseinrichtungen eine dahingehende Bewegung zulässt, lässt sich insbesondere ein gekrümmter Bahnverlauf realisieren. Für den Fall, dass hier beide Führungseinrichtungen eine Bewegung der jeweils zugeordneten Drehaufnahme zulassen, lässt sich sowohl ein reines Verschieben des Bürstenkörpers unter Erhalt der Ausrichtung seiner Drehachse als auch ein Verschwenken des Bürstenkörpers oder eine Kombination der beiden Bewegungen realisieren.

Bei einer Ausführungsform der erfindungsgemäßen Tierpflege- und/oder Reinigungseinrichtung weist eine der Führungseinrichtungen ein Schwenklager auf, dessen Schwenkachse senkrecht zur Drehachse des Bürstenkörpers ausgerichtet ist und das mit einer der Drehaufnahmen drehfest verbunden ist. Hierdurch ist ein Verschwenken des Bürstenkörpers in von der Richtung der Drehachse des Bürstenkörpers abweichenden Richtungen ermöglicht, die durch das dahingehende Schwenklager vorgebbar sind.

Bei einer Ausführungsform der erfindungsgemäßen Tierpflege- und/oder Reinigungseinrichtung ist die andere Drehaufnahme entlang einer Kreisbahn um die Schwenkachse bewegbar. Insbesondere durch eine Kombination, bei der im Bereich der einen Drehaufnahme ein Schwenklager vorgesehen ist und die andere Drehaufnahme entlang einer Kreisbahn um die dahingehende Schwenkachse bewegbar ist, kann der dahingehende Bürstenkörper ähnlich dem Zeiger einer Uhr in einer ungefähr senkrecht zur Schwenkachse ausgerichteten Ebene ausgelenkt werden und ist dennoch, da er endseitig in den Drehaufnahmen geführt ist, vor mutwilligen Beschädigungen wirksam geschützt. Eine dahingehende Kombination von Führungseinrichtungen gewährleistet somit zum einen die für den Betrieb der erfindungsgemäßen Tierpflege- und/oder Reinigungseinrichtung gewünschte Auslenkbarkeit des Bürstenkörpers, trägt aber auch der gewünschten hohen Stabilität der Tierpflege- und/oder Reinigungseinrichtung Rechnung.

Bei einer Ausführungsform der erfindungsgemäßen Tierpflege- und/oder Reinigungseinrichtung weist diese eine ständerförmige Halteeinrichtung auf, bei der eine der Führungseinrichtungen an einem Mast der Halteeinrichtung angeordnet ist und die andere Führungseinrichtung an einem Ausleger des Mastes derart bewegbar angeordnet ist, dass die zugeordnete Drehaufnahme bei den Auslenkbewegungen des Bürstenkörpers unterschiedliche Neigungswinkel der Drehachse relativ zum Mast definiert. Eine derartige Halteeinrichtung lässt sich zum einen mechanisch einfach und dennoch mit hoher Stabilität realisieren und erlaubt darüber hinaus durch eine geeignete Wahl der Anordnung der einen Führungseinrichtung an dem Mast und der anderen Führungseinrichtung an dem Ausleger der Halteeinrichtung in Zusammenwirken mit der Rückstelleinrichtung eine wählbare Ausrichtung des Bürstenkörpers in seiner Ausgangsstellung.

Bei besonders vorteilhaften Ausführungsbeispielen erstreckt sich der Ausleger vom Mast weg in einer nach unten gerichteten Schräge, die so gewählt ist, dass sie bei der Ausgangsstellung des Bürstenkörpers mit der Drehachse einen rechten Winkel bildet. Somit entspricht die Richtung der von der zugeordneten Führungseinrichtung gebildeten Führungsbahn für die Auslenkbewegung der zugeordneten Drehaufnahme im Wesentlichen der Richtung des schrägen Auslegers, wodurch eine besonders einfache Bauweise der Führungseinrichtung ermöglicht ist.

Bei einer bevorzugten Ausführungsform der erfindungsgemäßen Tierpflege- und/oder Reinigungseinrichtung weicht hierbei die Ausrichtung des Bürstenkörpers in seiner Ausgangsstellung sowohl von der Horizontalen als auch von der Vertikalen ab, nimmt also beispielsweise bezüglich eines weitgehend horizontal verlaufenden Stallbodens eine schräge Ausgangsstellung ein. Durch eine derartige schräge Ausgangsstellung kann das zu bürstende Tier sowohl ein Bürsten seines Rückenbereichs als auch eines Teils seines Seitenbereichs mit nur einem Bürstenkörper erreichen. Eine dahingehende Schrägstellung weist darüber hinaus den Vorteil auf, dass eine Beschädigung des Bürstenkörpers bzw. der Tierpflege- und/oder Reinigungseinrichtung durch das Treten bzw. Aufspringen von Tieren auf den Bürstenkörper wirksam verhindert ist, da ein Tier bei dem dahingehenden Vorgang keinen Halt an dem schräg gestellten Bürstenkörper finden wird. Im Übrigen kann eine derartige Einrichtung so stabil ausgelegt werden, dass keine Verformung stattfindet.

Bei einer Ausführungsform der erfindungsgemäßen Tierpflege- und/oder Reinigungseinrichtung weist diese einen Positionsdetektor auf, der ein Herausbewegen des Bürstenkörpers aus der Ausgangsstellung erkennt und ein Signal zum Ein- und/oder Ausschalten der Antriebseinrichtung steuert. Ein derartiger Positiorisdetektor erlaubt zum einen ein automatisches Ein- bzw. Ausschalten der Antriebseinrichtung, so dass hierzu kein Servicepersonal vor Ort sein muss. Da das Herausbewegen des Bürstenkörpers aus der Ausgangsstellung bereits nach kurzer Zeit von den Tieren als Steuermöglichkeit für die Antriebseinrichtung der Tierpflege- und/oder Reinigungseinrichtung erlernt ist, können diese selbständig die Antriebseinrichtung beispielsweise einschalten. Abgesehen von der damit einhergehenden Energieeinsparung fällt durch ein automatisches Ausschalten der Antriebseinrichtung auch der durch die Antriebseinrichtung entwickelte Lärm weg.

Bei einer Ausführungsform der erfindungsgemäßen Tierpflege- und/oder Reinigungseinrichtung ist die jeweilige Betriebsdauer der Antriebseinrichtung nach deren Einschalten durch eine Zeitschalteinrichtung begrenzbar. Durch ein Begrenzen der Betriebsdauer der Antriebseinrichtung nach deren Einschalten ist erreicht, dass ein Tier nicht durch ein einmaliges Einwirken seines Körpers zum Herausbewegen des Bürstenkörpers aus der Ausgangsstellung einen permanenten Betrieb der Antriebseinrichtung erreichen kann. Nach Ablauf der durch die Zeitschalteinrichtung begrenzten Betriebsdauer der Antriebseinrichtung wird sich das Tier zunächst von der Tierpflege- und/oder Reinigungseinrichtung entfernen müssen, um dergestalt entweder anderen Tieren Platz zu machen oder durch ein erneutes Herausbewegen des Bürstenkörpers aus seiner Ausgangsstellung die Antriebseinrichtung in Betrieb zu nehmen.

Bei einer Ausführungsform der erfindungsgemäßen Tierpflege- und/oder Reinigungseinrichtung erfolgt bei jedem Einschalten der Einrichtung ein Drehrichtungswechsel des Bürstenkörpers. Hierdurch ist zum einen eine gleichmäßige Abnutzung des Bürstenkörpers erreicht, des Weiteren ist es so aber auch möglich, dass ein Tier jeweils für den betreffenden Teil seines Körpers eine angenehme Drehrichtung des Bürstenkörpers erreichen kann, was insbesondere dann zum Tragen kommt, wenn die Tierpflege- und/oder Reinigungseinrichtung beispielsweise durch Anbringung an einer Wand oder Säule nicht von sämtlichen Seiten her erreichbar ist. Insbesondere lässt sich hierdurch erreichen, dass das Tier nicht gezwungen ist, sich "gegen das Fell" bürsten zu lassen.

Bei einer Ausführungsform der erfindungsgemäßen Tierpflege- und/oder Reinigungseinrichtung erfolgt beim Erreichen und/oder Überschreiten eines vorgebbaren Antriebswiderstandes eine Abschaltung der Antriebseinrichtung. Durch eine derartige Steuerung der Antriebseinrichtung kann zum einen möglichen Verletzungen vorgebeugt werden, die beispielsweise dadurch verursacht werden könnten, dass sich ein Tierkörper mit zu großer Energie gegen den Bürstenkörper drückt, zum anderen wird hierdurch aber auch eine Beschädigung der Antriebseinrichtung wirksam vermieden.

Bei einer Ausführungsform der erfindungsgemäßen Tierpflege- und/oder Reinigungseinrichtung erfolgt beim Erreichen und/oder Überschreiten eines vorgebbaren Antriebswiderstandes eine Drehrichtungsumkehr der Antriebseinrichtung. Die dahingehende Steuerung der Antriebseinrichtung stellt einen Gewinn an Betriebssicherheit dar, da so beispielsweise der Schwanz einer Milchkuh, der sich womöglich in dem Bürstenkörper verfangen hat und nun von diesem aufgewickelt wird, bei Erreichen des vorgebbaren Antriebswiderstandes durch die Drehrichtungsumkehr der Antriebseinrichtung wieder von dem Bürstenkörper befreit wird. So lassen sich Schmerzen oder gar Verletzungen bei den Tieren wirksam vermeiden.

Bei besonders vorteilhaften Ausführungsbeispielen ist der Bürstenkörper rotationssymmetrisch zur Drehachse ausgeführt und weist von einem mittleren Bereich des Bürstenkörpers zu einem oberen Endbereich des Bürstenkörpers hin einen zunehmenden Durchmesser auf. Durch eine derartige Gestalt der Form des Bürstenkörpers wird den gewölbten Oberflächen eines Tierkörpers Rechnung getragen, so dass der Bürstenkörper über einen möglichst großen Abschnitt seiner Längserstreckung an einem Tierkörper in Anlage bringbar ist und so einen möglichst großen Bereich eines Tieres bürsten und/oder massieren kann.

Nachstehend ist die Erfindung anhand eines in der Zeichnung dargestellten Ausführungsbeispiels im Einzelnen erläutert. Es zeigen:
- Fig. 1: eine perspektivische Ansicht einer erfindungsgemäßen Tierpflege- und/oder Reinigungseinrichtung;
- Fig. 2: eine perspektivische Draufsicht auf die erfindungsgemäße Tierpflege- und/oder Reinigungseinrichtung nach der Fig. 1; und
- Fig. 3: eine perspektivische Ansicht von der Seite her auf einen Teil der erfindungsgemäßen Tierpflege- und/oder Reinigungseinrichtung nach den Fig. 1 und 2.

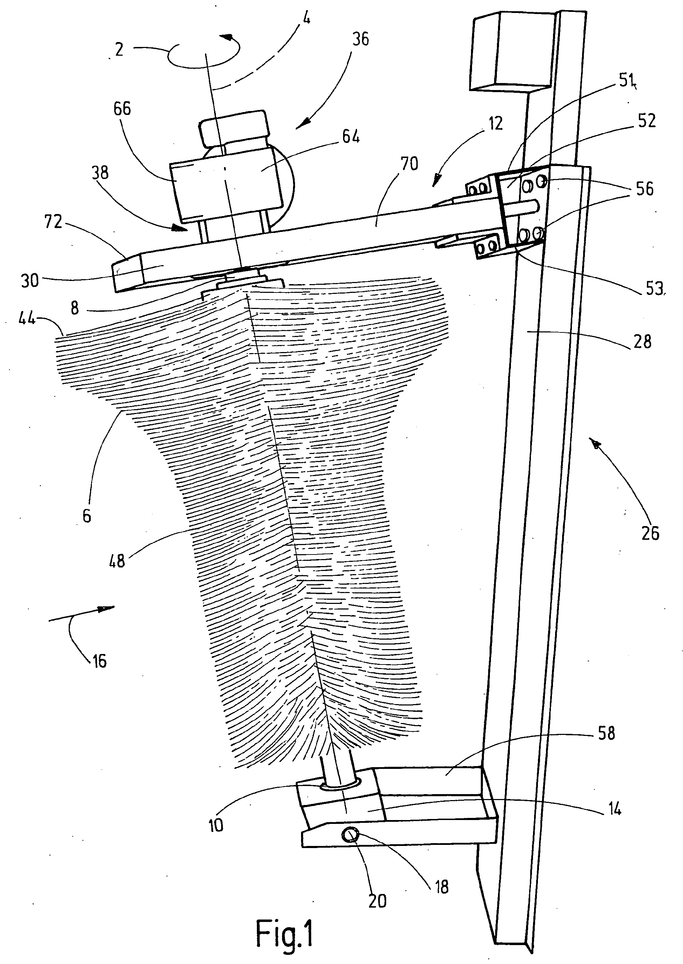

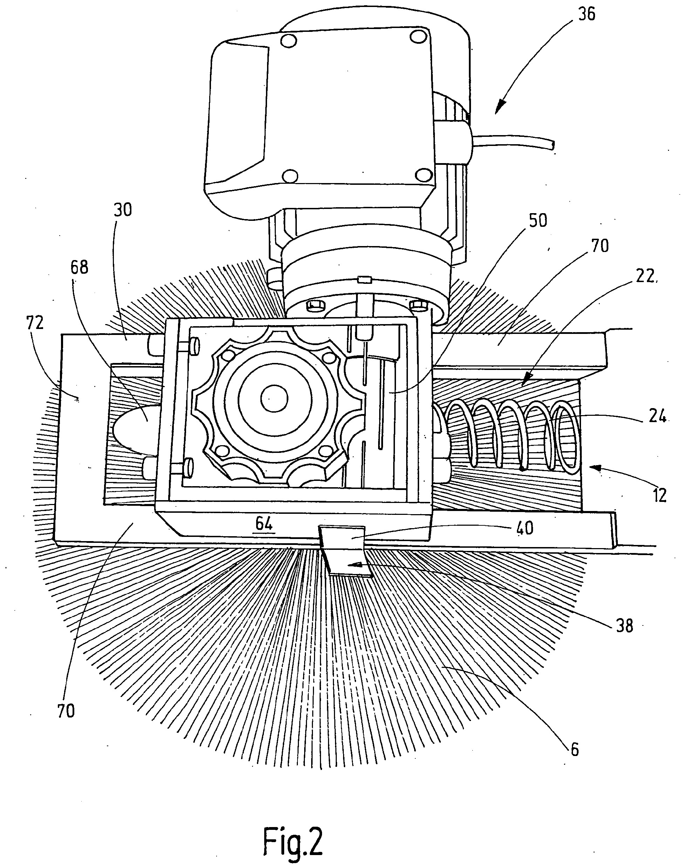

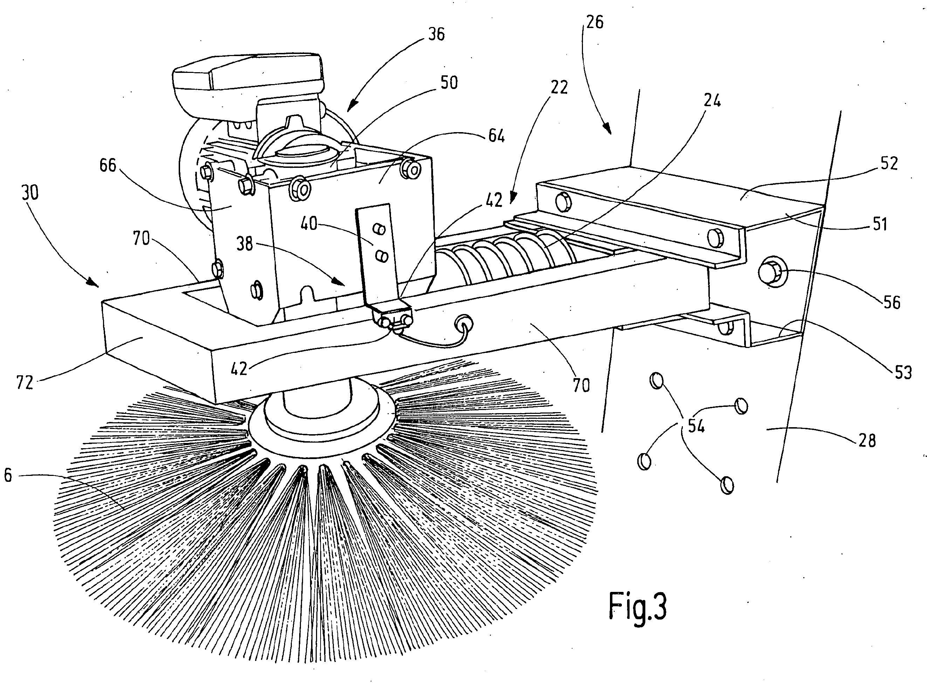

Gemäß der Fig. 1 weist die Tierpflege- und/oder Reinigungseinrichtung einen in mindestens einer Drehrichtung 2 um eine Drehachse 4 antreibbaren Bürstenkörper 6 auf, der endseitig in Drehaufnahmen 8 und 10 geführt ist. Hierbei ist die eine Drehaufnahme 8 in eine Richtung bewegbar, die von der Drehachse 4 des Bürstenkörpers 6 abweicht, und die beiden Drehaufnahmen 8 und 10 sind derart über Führungseinrichtungen 12 und 14 bewegbar gelagert, dass der Bürstenkörper 6 ausgehend von einer in der Fig. 1 gezeigten Ausgangsstellung unter Einwirkung eines Tierkörpers in Richtung einer Pflege- und/oder Reinigungsstellung auslenkbar ist. Eine Rückstelleinrichtung 22 (s. Fig. 2 und Fig. 3) versucht zumindest im Reinigungs- und/ oder Pflegebetrieb, den rotierenden Bürstenkörper 6 in Richtung seiner in der Fig. 1 gezeigten Ausgangsstellung zu halten.

Hierbei erlaubt die Führungseinrichtung 12 (s. a. Fig. 2) eine Bewegung der zugeordneten Drehaufnahme 8 längs einer Bahn mit geradem und/oder gekrümmtem Bahnverlauf, so dass der Bürstenkörper 6 bei der dahingehenden Bewegung der zugeordneten Drehaufnahme 8 ausgelenkt werden kann.

Die Führungseinrichtung 12 ist mit der Rückstelleinrichtung 22 (s. Fig. 2) gekoppelt, und die Rückstelleinrichtung 22 weist einen erfindungsgemäßen als eine Feder ausgeführten Kraftspeicher 24 auf, der in seinem in den Figuren dargestellten entspannten Zustand den Bürstenkörper 6 in der Ausgangsstellung zu halten sucht. Durch Einwirkung eines Tierkörpers auf den Bürstenkörper 6, insbesondere in Richtung des in der Fig. 1 gezeigten Kraftpfeils 16 kann der Kraftspeicher 24 in einen geladenen oder gespannten Zustand versetzt werden.

Die Führungseinrichtung 14 weist ein Schwenklager 18 auf, dessen Schwenkachse 20 senkrecht zur Drehachse 4 des Bürstenkörpers 6 ausgerichtet ist und das mit der Drehaufnahme 10 drehfest verbunden ist.

Die Tierpflege- und/oder Reinigungseinrichtung weist eine ständerförmige Halteeinrichtung 26 auf, wobei die Führungseinrichtung 14 an einem Mast 28 der Halteeinrichtung 26 angeordnet ist und die andere Führungseinrichtung 12 an einem Ausleger 30 der Halteeinrichtung 26 bewegbar angeordnet ist.

Wie aus Fig. 1 und 3 zu ersehen ist, ist der Ausleger 30 am Mast 28 mittels einer Konsole 52 festgelegt, die über Schraubverbindungen 56, die Durchgangslöcher 54 am Mast durchdringen, an diesem angebracht ist. Die Konsole 52 weist für die Verbindung mit dem Ausleger 30 einen oberen Schenkel 51 und einen kürzeren unteren Schenkel 53 auf, so dass sich der Ausleger 30 zur Horizontalen schräg nach unten erstreckt, wobei die Schrägstellung so gewählt ist, dass, wie am deutlichsten aus Fig. 1 zu ersehen ist, sich der Ausleger 30 etwa im rechten Winkel zur Drehachse 4 des Bürstenkörpers 6 erstreckt. Für die Schraubverbindungen 56 sind am Mast 28 mehrere Durchgangslöcher 54 in verschiedenen Höhen des Mastes 28 vorgesehen, so dass die Höhe des montierten Auslegers 30 über dem Boden entsprechend den Bedürfnissen gewählt werden kann.

Wie in den Figuren 1, 2 und 3 dargestellt, weist die Tierpflege- und/oder Reinigungseinrichtung eine Antriebseinrichtung 36 auf, die dem Antrieb des Bürstenkörpers 6 dient und die so mit dem Bürstenkörper gekoppelt ist (s. Fig. 3), dass die Antriebseinrichtung 36 gemeinsam mit dem Bürstenkörper 6 bewegbar ist. Dies lässt sich beispielsweise dadurch erreichen, dass die Drehaufnahme 8 (in der Fig. 1 im Bereich des oberen Endes der Bürste 6) drehfest mit der Führungseinrichtung 12 verbunden ist und ein Gehäuse der Antriebseinrichtung 36 wiederum drehfest mit der Drehaufnahme 8 gekoppelt ist, so dass eine Antriebswelle der Antriebseinrichtung 36 fluchtend mit der Drehachse 4 des Bürstenkörpers 6 ausgerichtet ist und dergestalt die Antriebseinrichtung 36 bei einer Auslenkung des Bürstenkörpers 6 die dahingehende Bewegung mit ausführt. Die Antriebswelle der Antriebseinrichtung 36 kann jedoch auch nicht fluchtend zur Drehachse 4 ausgerichtet sein und wie in Figur 2 und 3 gezeigt kann über ein geeignetes Getriebe 50, das gleichzeitig eine Anpassung der Orientierung der Welle der Antriebseinrichtung 36 an die Orientierung der Drehachse 4 vornimmt, der Antrieb des Bürstenkörpers 6 erfolgen. Eine drehfeste Lagerung der Drehaufnahme 8 kann beispielsweise in der einfachsten Ausführung dadurch realisiert sein, dass diese über einen als Feder ausgeführten Kraftspeicher 24 der Führungseinrichtung 12 an einem Verdrehen gegenüber dem Ausleger 30 der Halteeinrichtung 26 gehindert ist.

Die Tierpflege- und/oder Reinigungseinrichtung weist einen Positionsdetektor 38 auf (s. Fig. 3), welcher beispielsweise durch eine gegenüber einem Näherungssensor 42 beweglich angeordneten Winkel 40 gebildet sein kann. In Abhängigkeit des Typs des Näherungssensors 42 kann hierbei der Winkel aus einem metallischen oder auch nicht-metallischen Werkstoff gebildet sein. Selbstverständlich sind auch Lösungen realisierbar, bei denen anstelle eines Näherungssensors 42 andere Komponenten, wie ein Federstabschalter oder eine Lichtschranke zum Einsatz kommen und beispielsweise die in der Fig. 3 dargestellte Ausgangsstellung dadurch detektiert wird, dass von einer Lichtschranke (nicht dargestellt) emittierte Lichtstrahlen an dem der Lichtschranke gegenüberliegenden Schenkel des Winkels reflektiert werden. Der Bürstenkörper 6 kann, wie in der Fig.1 dargestellt, rotationssymmetrisch zur Drehachse 4 ausgeführt sein und von einem mittleren Bereich 48 des Bürstenkörpers 6 zu einem oberen Endbereich 44 des Bürstenkörpers 6 hin einen zunehmenden Durchmessers aufweisen. Diese Form des Bürstenkörpers ist der Kontur eines Tierkörpers angepasst, so dass der Bürstenkörper über einen großen Abschnitt seiner Längserstreckung mit dem betreffenden Tierkörper in Anlage kommt und somit ein möglichst großer Bereich des Tieres gebürstet und/oder massiert wird.

Das beim Herausbewegen des Bürstenkörpers 6 aus der Ausgangsstellung sich ändernde Ausgangssignal des Näherungssensors 42 steuert ein Signal zum Ein- und/oder Ausschalten der Antriebseinrichtung 36 durch eine geeignete Elektronik (nicht dargestellt). Es kann hierbei vorgesehen sein, dass die jeweilige Betriebsdauer der Antriebseinrichtung 36 nach deren Einschalten durch eine Zeitschalteinrichtung begrenzt ist. Dergestalt ist gewährleistet, dass auch für den Fall, dass die Rückstelleinrichtung 22 den Bürstenkörper 6 aufgrund einer Störung nicht wieder in seine Ausgangsstellung zurückführt, obwohl kein Tierkörper auf den Bürstenkörper einwirkt, eine Abschaltung der Antriebseinrichtung nach der begrenzten Betriebsdauer erfolgt.

Das Schwenklager 18 im Bereich des in der Fig. 1 unteren Endes des Bürstenkörpers 6 ist über eine Befestigungseinrichtung 58 in einem geeigneten Abstand von dem Mast 28 angebracht, so dass für alle Stellungen, die der Bürstenkörper 6 einnehmen kann, gewährleistet ist, das dieser nicht durch den Mast 28 in seinen Bewegungen behindert ist. Hierdurch ist auch eine unbeabsichtigte Abnutzung des Bürstenkörpers 6 in diesem Bereich vermieden. Zwei von dem Mast 28 beabstandete Schenkel der Befestigungseinrichtung 58 sowie die Führungseinrichtung 14, die zwischen den Schenkeln aufgenommen ist, werden zur Ausbildung des Schwenklagers 18 hierbei in Richtung der Schwenkachse 20 von einer Lagerwelle durchgriffen, um die die kastenartig ausgebildete Drehaufnahme 10 schwenkbar ist.

Der Ausleger 30, an dem die Führungseinrichtung 12 für die bei Sicht auf Fig. 1 obere Drehaufnahme 8 bewegbar angeordnet ist, weist wie in Fig. 2 gezeigt zwei Schenkel 70 auf, welche an ihren dem Mast 28 abgewandten Enden durch ein Joch 72 des Auslegers 30 miteinander verbunden sind. Dadurch ist die insbesondere bei Sicht auf Fig. 3 zu erkennen zwischen dem Mast 28 sowie dem Joch 72 ein durch die Schenkel 70 seitlich begrenzter Freiraum geschaffen, der die Auslenkung des Bürstenkörpers 6 und der damit verbundenen Antriebseinrichtung 36 bei einem Verschwenken um die Schwenkachse 20 zulässt. Die seitliche Begrenzung des Freiraums durch die Schenkel 70 verhindert auch, dass Tiere den Bürstenkörper 6 in andere als die vorgesehenen Richtungen, insbesondere quer zu den Schenkeln 70, auslenken können. Gemäß Fig. 2 ist die Antriebseinrichtung 36 und/oder das Getriebe 50 in einem im Ausführungsbeispiel bei Blick auf Fig. 1 nach oben und unten hin offenen Gehäuse 64 angeordnet, das (s. Fig. 2) beispielhaft vier miteinander verbundene und einen quaderförmigen Körper bildende rechteckförmige Seitenwände aufweist.

An einer vorderen Seitenwand 66 des Gehäuses 64, welche den seitlichen Abschluss des Gehäuses 64 in Richtung des Jochs 72 des Auslegers 30 bildet, ist ein Dämpfungskörper 68 angeordnet, der bei der in der Fig. 2 gezeigten Ausgangsstellung in Anlage an das Joch 72 gebracht ist. Bei dem Dämpfungskörper 68 kann es sich um einen elastischen Dämpfungskörper 68 handeln, der insbesondere deformierbar ist und nach einer Deformation seine Ursprungsform wieder annehmen kann. Im Ausführungsbeispiel ist ein dahingehender Dämpfungskörper 68 durch einen Gummipuffer gebildet, der eine Bewegung des Bürstenkörpers 6 durch den Kraftspeicher 24 in Richtung des Jochs 72 durch Anschlag an der der Seitenwand 66 gegenüberliegenden Seitenfläche des Jochs 72 begrenzt. Insbesondere bei einem schlagartigen Rückkehren des Bürstenkörpers 6 in seine Ausgangsstellung wird durch den Dämpfungskörper 68 ein Anstoßen des Gehäuses 64 an das Joch 72 gedämpft und dergestalt sind Beschädigungen der Antriebseinrichtung 36 und/oder des Getriebes 50 wirksam verhindert. Darüber hinaus trägt der Dämpfungskörper 68 auch zu einer Lärmminderung bei der Rückkehr des Bürstenkörpers 6 in seine Ausgangsstellung bei. Bevorzugt ist der Dämpfungskörper 68 aus einem solchen Material gebildet, welches durch Deformation einen Großteil kinetischer Energie in Wärmeenergie umsetzt, so dass durch das Zusammenwirken des Dämpfungskörpers 68 und des Kraftspeichers 24, die jeweils auf gegenüberliegenden Seiten der Drehaufnahme 8 angeordnet sind, ein nach einem Auslenken des Bürstenkörpers 6 erfolgtes Zurückschwenken des Bürstenkörpers 6 nicht zu pendelartigen Hin- und Herbewegung des Bürstenkörpers führt.

Im praktischen Einsatz wird sich ein Tier mit seinem Körper in Richtung des Kraftpfeils 16 (s. Fig. 1) gegen den Bürstenkörper 6 drücken, woraufhin der Bürstenkörper 6 um das Schwenklager 20 der in der Fig. 1 unteren Führungseinrichtung 14 in Richtung des Mastes 28 und gegen die Wirkung des Kraftspeichers 24 der Führungseinrichtung 12 auslenkt wird. Die dahingehende Bewegung des Bürstenkörpers 6 hat zur Folge, dass der an dem Gehäuse 64 angeordnete Winkel 40 des Positionsdetektors 38 sich ebenfalls in Richtung des Mastes 28 und damit aus dem Bereich des Näherungssensors 42 herausbewegt. Das hierbei erzeugte Signal des Positionsdetektors 38 führt zu einem Einschalten der Antriebseinrichtung 36, die daraufhin den Bürstenkörper 6 um die Drehachse 4 antreibt. Solange sich der Tierkörper gegen den Bürstenkörper 6 drückt und somit der Bürstenkörper 6 in Richtung des Mastes 28 aus seiner Ausgangsstellung ausgelenkt bleibt, kann vorgesehen sein, dass die Betriebseinrichtung 36 unterbrechungsfrei den Bürstenkörper 6 antreibt oder aber auch durch eine (nicht dargestellte) Zeitbegrenzungsschaltung nur für eine begrenzte Zeit der Antrieb aufrechterhalten wird. Sobald sich der Tierkörper entgegen dem Kraftpfeil 16 wieder von dem Bürstenkörper 6 entfernt und daher der Bürstenkörper 6 wieder entgegen dem Uhrzeigersinn in seine Ausgangsstellung zurück gelangt, wird dies durch den Positionsdetektor 38 detektiert, und unmittelbar oder nach dem Ablauf einer vorgebbaren Zeit beendet die Antriebseinrichtung 36 den Antrieb des Bürstenkörpers 6. Aufgrund der Federprogression der Druckfeder 24 nimmt deren Gegenhaltekraft zusehends zu, sobald unter dem Einfluß des jeweiligen Tierkörpers der Bürstenkörper 6 im Uhrzeigersinn gegen die Druckfeder 24 immer weiter verschwenkt wird.

## Patentansprüche

1. Tierpflege- und/oder Reinigungseinrichtung mit einem in mindestens einer Drehrichtung (2) um eine Drehachse (4) mittels einer Antriebseinrichtung (36) antreibbaren Bürstenkörper (6), der endseitig an seinen beiden Enden in Drehaufnahmen (8, 10) geführt ist, die mit einer Halteeinrichtung (26) verbunden sind, wobei für eine Schrägstellung der Drehachse (4) des Bürstenkörpers (6) relativ zur Vertikalen die obere (8) der beiden Drehaufnahmen (8, 10) von der Halteeinrichtung (26) einen größeren Abstand besitzt als die untere Drehaufnahme (10), wobei die Drehaufnahmen (8, 10) über Führungseinrichtungen (12, 14) derart bewegbar gelagert sind, dass der Bürstenkörper (6), ausgehend von einer Ausgangsstellung, unter Einwirkung eines Tierkörpers in Richtung (16) einer Pflege- und/ oder Reinigungsstellung auslenkbar ist, und wobei zumindest eine der Führungseinrichtungen (12) mit einer Rückstelleinrichtung (22) gekoppelt ist, die zumindest im Reinigungs- und/oder Pflegebetrieb den rotierenden Bürstenkörper (6) in Richtung seiner Ausgangsstellung zu halten sucht, **dadurch gekennzeichnet, dass** die Rückstelleinrichtung (22) einen als Feder ausgeführten Kraftspeicher (24) aufweist, der in seinem entspannten Zustand den Bürstenkörper (6) in der Ausgangsstellung zu halten sucht und durch Einwirkung eines Tierkörpers in einen gespannten Zustand versetzbar ist, und dass die Antriebseinrichtung (36) derart mit dem Bürstenkörper (6) gekoppelt ist, dass die Antriebseinrichtung (36) gemeinsam mit dem Bürstenkörper (6) bewegbar ist.

2. Tierpflege- und/oder Reinigungseinrichtung nach Anspruch 1, **dadurch gekennzeichnet, dass** zumindest eine der Führungseinrichtungen (12) eine Bewegung der zugeordneten Drehaufnahme (8) längs einer Bahn mit geradem und/oder gekrümmtem Bahnverlauf zulässt und dergestalt der jeweilige Bürstenkörper (6) auslenkbar ist.

3. Tierpflege- und/oder Reinigungseinrichtung nach Anspruch 1 oder 2, **dadurch gekennzeichnet, dass** die untere Drehaufnahme (10) ein Schwenklager (18) aufweist, dessen Schwenkachse (20) senkrecht zur Drehachse (4) des Bürstenkörpers (6) ausgerichtet ist und das mit dieser Drehaufnahme (10) drehfest verbunden ist.

4. Tierpflege- und/oder Reinigungseinrichtung nach einem der Ansprüche 1 bis 3, **dadurch gekennzeichnet, dass** sie eine ständerförmige Halteeinrichtung (26) aufweist, bei der eine der Führungseinrichtungen (14) an einem Mast (28) der Halteeinrichtung (26) angeordnet ist und die andere Führungseinrichtung (12) an einem Ausleger (30) des Mastes (28) derart bewegbar angeordnet ist, dass die zugeordnete obere Drehaufnahme (8) bei den Auslenkbewegungen des Bürstenkörpers (6) unterschiedliche Neigungswinkel der Drehachse (4) relativ zum Mast (28) definiert.

5. Tierpflege- und/oder Reinigungseinrichtung nach Anspruch 4, **dadurch gekennzeichnet, dass** sich der Ausleger (30) vom Mast (28) weg in einer nach unten gerichteten Schräge erstreckt, die so gewählt ist, dass sie bei der Ausgangsstellung des Bürstenkörpers (6) mit der Drehachse (4) einen zumindest annähernd rechten Winkel bildet.

6. Tierpflege- und/oder Reinigungseinrichtung nach einem der Ansprüche 1 bis 5, **dadurch gekennzeichnet, dass** sie einen Positionsdetektor (38) aufweist, der ein Herausbewegen des Bürstenkörpers (6) aus der Ausgangsstellung erkennt und ein Signal zum Ein- und/oder Ausschalten der Antriebseinrichtung (36) steuert.

7. Tierpflege- und/oder Reinigungseinrichtung nach einem der Ansprüche 1 bis 6, **dadurch gekennzeichnet, dass** die jeweilige Betriebsdauer der Antriebseinrichtung (36) nach deren Einschalten durch eine Zeitschalteinrichtung begrenzbar ist.

8. Tierpflege- und/oder Reinigungseinrichtung nach einem der Ansprüche 1 bis 7, **dadurch gekennzeichnet, dass** bei jedem Einschalten der Einrichtung ein Drehrichtungswechsel des Bürstenkörpers (6) erfolgt.

9. Tierpflege- und/oder Reinigungseinrichtung nach einem der Ansprüche 1 bis 8, **dadurch gekennzeichnet, dass** beim Erreichen und/oder Überschreiten eines vorgebbaren Antriebswiderstandes eine Abschaltung der Antriebseinrichtung (36) erfolgt.

10. Tierpflege- und/oder Reinigungseinrichtung nach einem der Ansprüche 1 bis 9, **dadurch gekennzeichnet, dass** beim Erreichen und/oder Überschreiten eines vorgebbaren Antriebswiderstandes eine Drehrichtungsumkehr der Antriebseinrichtung (36) erfolgt.

11. Tierpflege- und/oder Reinigungseinrichtung nach einem der Ansprüche 1 bis 10, **dadurch gekennzeichnet, dass** der Bürstenkörper (6) rotationssymmetrisch zur Drehachse (4) ausgeführt ist und von einem mittleren Bereich (48) des Bürstenkörpers (6) zu einem oberen Endbereich (44) des Bürstenkörpers (6) hin einen zunehmenden Durchmesser aufweist.

## Claims

1. An animal care and/or cleaning device comprising a brush body (6) that can be driven about a rotational axis (4) in at least one rotational direction (2) by means of a drive device (36), which brush body (6) is guided in rotary receptacles (8, 10) on both of its ends, which rotary receptacles are connected to a holding device (26), for inclined positioning of the rotational axis (4) of the brush body (6) relative to the vertical, the upper (8) of the two rotary receptacles (8, 10) being further away from the holding device (26) than the lower rotary receptacle (10), the rotary receptacles (8, 10) being moveably mounted by guide devices (12, 14) such that the brush body (6) can be deflected from an initial position by the effect of an animal's body in the direction (16) of a care and/or cleaning position, and at least one of the guide devices (12) being coupled with a re-set device (22) which, at least during cleaning and/or care operation, seeks to hold the rotating brush body (6) in the direction of its initial position, **characterised in that** the re-set device (22) has an energy store (24) in the form of a spring which in its untensioned state seeks to hold the brush body (6) in the initial position and can be moved into a tensioned state by the effect of an animal's body, and that the drive device (36) is coupled with the brush body (6) such that the drive device (36) can be moved together with the brush body (6).

2. An animal care and/or cleaning device according to Claim 1, **characterised in that** at least one of the guide devices (12) allows movement of the assigned rotary receptacle (8) along a path with a straight and/or curved trajectory and the respective brush body (6) can thus be deflected.

3. An animal care and/or cleaning device according to Claim 1 or 2, **characterised in that** the lower rotary receptacle (10) has a swivel bearing (18), the swivel axis (20) of which is aligned perpendicular to the rotational axis (4) of the brush body (6), and which is connected non-rotatably to this rotary receptacle (10).

4. An animal care and/or cleaning device according to any of Claims 1 to 3, **characterised in that** it has a stand-type holding device (26) on which one of the guide devices (14) is disposed on a pole (28) of the holding device (26) and the other guide device (12) is disposed movably on an arm (30) of the pole (28) such that the assigned upper rotary receptacle (8) defines different angles of inclination of the rotational axis (4) relative to the pole (28) with the deflection movements of the brush body (6).

5. An animal care and/or cleaning device according to Claim 4, **characterised in that** the arm (30) extends away from the pole (28) on a downwardly directed slope which is chosen such that it forms an at least approximate right angle with the rotational axis (4) in the initial position of the brush body (6).

6. An animal care and/or cleaning device according to any of Claims 1 to 5, **characterised in that** it has a position detector (38) which recognises a movement of the brush body (6) out of the initial position and controls signalling for switching the drive device (36) on and/or off.

7. An animal care and/or cleaning device according to any of Claims 1 to 6, **characterised in that** the respective operating period of the drive device (36) can be limited after it is switched on by a time switch device.

8. An animal care and/or cleaning device according to any of Claims 1 to 7, **characterised in that** each time the device is switched on the brush body (6) changes its rotational direction.

9. An animal care and/or cleaning device according to any of Claims 1 to 8, **characterised in that** upon reaching and/or exceeding a pre-definable drive resistance the drive device (36) is switched off.

10. An animal care and/or cleaning device according to any of Claims 1 to 9, **characterised in that** upon reaching and/or exceeding a pre-definable drive resistance the rotational direction of the drive device (36) is reversed.

11. An animal care and/or cleaning device according to any of Claims 1 to 10, **characterised in that** the brush body (6) is made to be rotationally symmetrical to the rotational axis (4) and has a diameter that increases from a central region (48) of the brush body (6) to an upper end region (44) of the brush body (6).

## Revendications

1. Dispositif de soin et/ou de nettoyage d'animaux, comprenant un corps (6) de brosse, qui peut être entraîné dans au moins un sens (2) de rotation autour d'un axe (4) de rotation au moyen d'un dispositif (36) d'entraînement et qui est guidé du côté de l'extrémité, à ses deux extrémités, dans des logements (8, 10) de rotation reliés à un dispositif (26) de maintien, dans lequel, pour une position inclinée de l'axe (4) de rotation du corps (6) de brosse par rapport à la verticale, le logement (8) supérieur des deux logements (8, 10) de rotation est à une distance du dispositif (26) de maintien plus grande que le logement (10) de rotation inférieur, les logements (8, 10) de rotation étant montés mobiles par des dispositifs (12, 14) de guidage, de manière à pouvoir dévier le corps (6) de brosse, à partir d'une position initiale sous l'action d'un corps d'animal, dans la direction (16) d'une position de soin et/ou de nettoyage, et dans lequel au moins l'un des dispositifs (12) de guidage est couplé à un dispositif (22) de rappel, qui tend à maintenir le corps (6) de brosse tournant, au moins en fonction de nettoyage et/ou de soin, dans la direction de sa position initiale, **caractérisé en ce que** le dispositif (22) de rappel a un accumulateur (24) de force, qui est réalisé sous la forme d'un ressort, qui tend, dans son état détendu, à maintenir le corps (6) de brosse dans la position initiale et qui peut, par l'action d'un corps d'animal, être mis dans un état bandé et **en ce que** le dispositif (36) d'entraînement est couplé au corps (6) de brosse, de manière à ce que le dispositif (36) d'entraînement puisse être déplacé conjointement avec le corps (6) de brosse.

2. Dispositif de soin et/ou de nettoyage d'animaux suivant la revendication 1, **caractérisé en ce qu'**au moins l'un des dispositifs (12) de guidage autorise un déplacement du logement (8) de rotation associé le long d'une voie ayant un tracé droit et/ou incurvé et ainsi le corps (6) de brosse peut être dévié.

3. Dispositif de soin et/ou de nettoyage d'animaux suivant la revendication 1 ou 2, **caractérisé en ce que** le logement (10) de rotation inférieur a un palier (18) pivotant dont l'axe (20) de pivotement est perpendiculaire à l'axe (4) de rotation du corps (6) de brosse et qui est solidaire en rotation de ce logement (10) de rotation.

4. Dispositif de soin et/ou de nettoyage d'animaux suivant l'une des revendications 1 à 3, **caractérisé en ce qu'**il a un dispositif (26) de maintien en forme de montant, dans lequel l'un des dispositifs (14) de guidage est monté sur un mât (28) du dispositif (26) de maintien et l'autre dispositif (12) de guidage est monté mobile sur une flèche (30) du mât (28), de manière à ce que le logement (8) de rotation supérieur associé définisse, lors des mouvements de déviation du corps (6) de brosse, des angles d'inclinaison différents de l'axe (4) de rotation par rapport au mât (28).

5. Dispositif de soin et/ou de nettoyage d'animaux suivant la revendication 4, **caractérisé en ce que** la flèche (30) s'étend en s'éloignant du mât (28), suivant une inclinaison dirigée vers le bas, choisie de manière à ce qu'elle forme, dans la position initiale du corps (6) de brosse avec l'axe (4) de rotation, un angle au moins à peu près droit.

6. Dispositif de soin et/ou de nettoyage d'animaux suivant l'une des revendications 1 à 5, **caractérisé en ce qu'**il a un détecteur (38) de position, qui détecte que le corps (6) de brosse sort de la position initiale et commande un signal d'enclenchement et/ou de désenclenchement du dispositif (36) d'entraînement.

7. Dispositif de soin et/ou de nettoyage d'animaux suivant l'une des revendications 1 à 6, **caractérisé en ce que** la durée de fonctionnement du dispositif (36) d'entraînement peut être limité, après son enclenchement, par une minuterie.

8. Dispositif de soin et/ou de nettoyage d'animaux suivant l'une des revendications 1 à 7, **caractérisé en ce que**, à chaque enclenchement du dispositif, il s'effectue un changement du sens de rotation du corps (6) de brosse.

9. Dispositif de soin et/ou de nettoyage d'animaux suivant l'une des revendications 1 à 8, **caractérisé en ce que**, lorsqu'une résistance d'entraînement pouvant être donnée à l'avance est atteinte et/ou dépassée, il s'effectue un arrêt du dispositif (36) d'entraînement.

10. Dispositif de soin et/ou de nettoyage d'animaux suivant l'une des revendications 1 à 9, **caractérisé en ce que**, lorsqu'une résistance d'entraînement pouvant être donnée à l'avance est atteinte et/ou dépassée, il s'effectue une inversion du sens de rotation du dispositif (36) d'entraînement.

11. Dispositif de soin et/ou de nettoyage d'animaux suivant l'une des revendications 1 à 10, **caractérisé en ce que** le corps (6) de brosse est de révolution par rapport à l'axe (4) de rotation et a un diamètre croissant d'une partie (48) médiane du corps (6) de brosse à une partie (44) d'extrémité supérieure du corps (6) de brosse.
